(19) Europäisches Patentamt
European Patent Office
Office européen des brevets

(11) EP 1 024 394 A1

(12) EUROPEAN PATENT APPLICATION

(43) Date of publication:
**02.08.2000 Bulletin 2000/31**

(51) Int Cl.[7]: **G02F 1/15**, G02F 1/163

(21) Application number: **99101380.6**

(22) Date of filing: **26.01.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Bayer Aktiengesellschaft**
**51368 Leverkusen (DE)**

(72) Inventors:
- **Haarer, Dietrich, Dr.**
  **95448 Bayreuth (DE)**
- **Schmidt, Stephan**
  **51469 Bergisch Gladbach (DE)**
- **Hagen, Rainer, Dr.**
  **51375 Leverkusen (DE)**
- **Li, Yongxiang, Dr.**
  **Dept.Com.& Electronic Engineer.**
  **Melbourne, Victoria 3001 (AU)**

# (54) Photochromic and electrochromic device, solutions for uses therein and use thereof

(57) New types of photochromic and electrochromic devices and solutions contained within them are provided. The new type photochromic devices constructed with $TiO_2$ layers on either clear glass or ITO glass sheets and on either one side or two sides inwardly can color when the devices are exposed to sunlight or illuminated by a xenon lamp and bleaches again when they are put into dark or the daylight at an indoor. The coloring and bleaching processes occur in a few minutes and are reversible. The new electrochromic devices constructed with a $TiO_2$ thin layer on an ITO glass sheet as one electrode provide good electrochromic performances. The photochromic and electrochromic devices of the present invention are stable to cycling between colored and bleached states. They can be used as variable transmission light filters, as smart windows, as displays, as mirrors, as UV radiation detectors or indicators, as sunlight glasses or sunroofs.

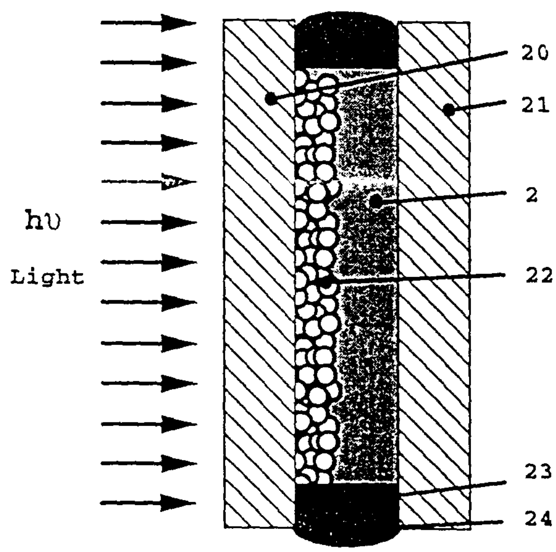


Fig. 2

EP 1 024 394 A1

## Description

The present invention relates to photochromic and electrochromic devices, solutions for use therein, and uses thereof. Such devices are designed to either photochromic or electrochromic, depending on desired applications, under the influences of illuminated light and/or applied potential. Photochromic devices have been suggested for use as smart windows, as UV protection glasses, as UV radiation detectors or indicators, and light intensity self-adjusting filters. Electrochromic devices have been suggested for use as variable transmission light filters, as smart windows, as mirrors, as UV radiation detectors or indicators, as displays and as sunlight glasses or sunroofs. More particularly, the present invention relates to multifunctional photo- and electrochromic devices and solutions for use therein and uses thereof.

US 4,902,108 and EP 0 435 689 A2 and the references cited therein, disclose electro-chemichromic devices and solutions of anodic and cathodic electrochromically coloring components which provide self-erasing, high color contrast, single-compartment cells. Such anodic and cathodic coloring components comprise the redox couple selected to possess the following reaction in the system

$$\underset{\substack{\text{(Colorless State)}\\\text{(Low Energy Pair)}}}{RED_1 + OX_2} \quad \underset{\text{without voltage}}{\overset{\text{voltage}}{\rightleftharpoons}} \quad \underset{\substack{\text{(Colored State)}\\\text{(High Energy Pair)}}}{OX_1 + RED_2}$$

The redox couple is selected such that the equilibrium state of mixture thereof lies completely to the left of the equation at zero potential. The species $RED_1$ and $OX_2$ are colorless. When a voltage is applied to the solution, the normally colorless $RED_1$ is anodically oxidized to its colored antipode $OX_1$, and $OX_2$ is cathodically reduced to its colored antipode $RED_2$, simultaneously. These cathodic/anodic reactions occur at the electrodes which, in practical devices, can enhance the coloration efficiencies of the electrochromic devices. On removing the potential (open circuit or short circuit), the high energy redox couple $OX_1$ and $RED_2$ in the solution revert to their lower energy pair $RED_1$ and $OX_2$ (left of the equilibrium), and the cell spontaneously selferases. This means, to cause a color change of such an electrochromic device, the applied potential is only needed to drive the above reaction to the right hand side of the equation.

Such redox pairs are dissolved in an inert solvent and, typically, an electrolyte and other additives are also added to improve the electrochromic performances.

If the device is to be used as an electrochromic mirror, one electrode must be a transparent conducting thin layer on a glass substrate such as indium tin oxide (ITO), another electrode is silver or aluminum coated or otherwise coated with a reflecting layer on its opposite side. In the case of light control windows and filters, both electrodes must be ITO-coated glasses so that when the redox pair is colorless, the window would be entirely transparent.

On the other hand, electrochromic device can take advantages of the surface affinity of the $TiO_2$ towards suitably demobilized viologens, and the high internal surface area and transparent nature of $TiO_2$ electrodes. Grätzel's group reported that a carboxylated viologen could be directly adsorbed to the $TiO_2$ surface, and optical densities up to 1 and coloration efficiencies at certain wavelengths above 100 $cm^2C^{-1}$ were obtained (Anders Hagfeldt, Lorenz Walder, and Michael Grätzel, "Nanostructured $TiO_2$ semiconductor electrodes modified with surface attached viologens: applications for displays and smart windows", Proc. SPIE-Int. Soc. Opt. Eng: (1995), 2531 (Optical Materials Technology for Energy Efficiency and Solar Energy Conversion XIV), 60-9); Anders Hagfeldt, Lorenz Walder, and Michael Grätzel, "Electrochromic switching with nanocrystalline $TiO_2$ semiconductor films with surface attached viologens", Proc. Electrochem. Soc. (1995), 95-8 (Proceedings of the Symposium on Nanostructured Materials in Electrochemistry, 1995), 143-53; Anders Hagfeldt, Nicolas Vlachopoulos, Scott Gilbert, and Michael Grätzel, "Electrochromic switching with nanocrystalline $TiO_2$ semiconductor films", Proc. SPIE-Int. Soc. Opt. Eng: (1994), 2255 (Optical Materials Technology for Energy Efficiency and Solar Energy Conversion XIII), 297-304; Anders Hagfeldt, Nicolas Vlachopoulos, Scott Gilbert, and Michael Grätzel, "Fast electrochromic switching with nanocrystalline oxide semiconductor films", J. Electrochem. Soc. 1994, 141(7), L82-84).

The switching times for these electrodes for both coloration and bleaching were faster than 1 s, using 0.5 M $LiClO_4$ in acetonitrile as electrolyte. Preliminary stability tests showed that such a cell went through 654 cycles of coloration and bleaching without a decline in the coloration efficiency. The device for carboxylated viologen adsorbed on a transparent nanocrystalline $TiO_2$ electrode gave blue colorations.

A wide variety of cathodically coloring species, anodically coloring species, inert current carrying electrolytes, addition of UV stabilizers and solvent systems, $TiO_2$ particles added to improve the color contrast and cycling properties are described in prior art (EP 0 435 689 A2 and US 4,902,108).

The present invention provides novel photochromic and electrochromic devices and the solutions therein. They have the advantages of high UV-absorption coloration efficiencies, and they are reversible, stable, multifunctional and easy to manufacture.

The present invention provides a novel photochromic device. In such a device, the photochromic medium, comprising a solution and a solvent, is held in a layer between parallel plates, at least one of which is a transparent sheet, such as a glass sheet, coated with a $TiO_2$ nanocrystalline layer on its inward surface. The $TiO_2$ thin layer is in contact with the photochromic medium. In another embodiment of the invention on one or both plates either between a $TiO_2$-coating and the coated plate or on a plate without a $TiO_2$-coating a layer of indium tin oxide (ITO) is coated.

The transparent nature and the high internal surface area of $TiO_2$ nanocrystalline layers are very beneficial to adsorb viologen molecules on $TiO_2$ particles, which can enhance the contrast properties of electrochromic cells. Furthermore, $TiO_2$ is a semiconductor, it can absorb UV light and generate electron-hole pairs (Michael D. Ward, James R. White, and Allen J. Bard, "Electrochemical investigation of the particulate titanium dioxide photocatalysts, the methylviologen-acetate system", J. Am. Chem. Soc. 1983, 105, 27-31; R. Rossetti, S. M. Beck, and L. E. Brus, "Direct observation of charge-transfer reactions across semiconductor: aqueous solution interfaces using transient Raman spectroscopy", J. Am. Chem. Soc. 1984, 106, 980-984; Anders Hagfeldt, and Michael Grätzel, "Light-induced redox reactions in nanocrystalline systems", Chem. Rev. 1995, 95, 49-68). These electron-hole pairs can be transferred to the photo- and electrochromic solution to oxidize $RED_1$ to its colored antipode $OX_1$ and reduce the $OX_2$ simultaneously to its colored antipode $RED_2$. The reactions which occur in such devices are as follows

$$TiO_2 + h\nu_1 \rightarrow TiO_2(e^- h^+) \text{ (excitation}$$

$$TiO_2(e^- h^+) \rightarrow TiO_2 \text{ (recombination)}$$

$$TiO_2(E^- h+) + RED_1 \rightarrow TiO_2\text{-}OX_1 \text{ (electron transfer, coloring process}$$

$$TiO_2(e^- h^+) + OX_2 \rightarrow TiO_2 + RED_2 \text{ (hole reception, coloring process)}$$

$$OX_1 + RED_2 \rightarrow RED_1 + OX_2 \text{ (bleaching process)}$$

The solution of the present invention can be either an aqueous or an organic. For devices filled with an aqueous solution, the color is changed from colorless to purplish red or violet, which filled with an organic solution is changed from colorless to blue, by illumination with a 75 W xenon lamp or under the sunlight for a few minutes. The devices bleach again after leaving them in the dark or indoor. The bleaching time depends on the solutions and the electrodes. When the electrodes are ITO-layers, the bleaching processes of the devices are much faster than as compared to the devices with $TiO_2$ on non-conducting transparent sheets.

In another aspect, for the photochromic cells of the present invention, it is not absolutely necessary to use a spacer between the two electrodes, since the highly porous $TiO_2$ layers can adsorb the molecules on its surface, and the solution can be also filled therein by surface capillary forces, which makes it very easy to seal and manufacture the cells.

The present invention further entails novel electrochromic devices comprising two parallel plates, at least one of which is a transparent sheet, both plates being coated with electric conductive layers such as layers of ITO on their inward faces and an electrochromic medium between the plates. In a preferred embodiment of the electrochromic device a $TiO_2$ thin layer is coated on one of the electrodes, which is preferred an ITO-layer. $TiO_2$ can absorb UV light (< 400nm) and is transparent in the visible spectral region, which reduces the photolysis or degradation of any UV vulnerable solute in the electrochromic solution. The solution stability to UV radiation can be improved. To a certain content, the electron-hole pairs generated by the incoming UV radiation can improve the electrochromic performances.

The present invention can lead to commercial devices like variable transmission light filters, smart windows, displays, mirrors, UV glasses, UV radiation detectors or indicators, and sunlight glasses, sunroofs or filters.

## Figures

The present invention may be illustrated with reference to the accompanying drawings, in which:

Figure 1 shows the transmission spectra of a clear glass, an ITO coated glass, a clear glass coated with a $TiO_2$ thin layer and an ITO coated glass coated with a $TiO_2$ thin layer, respectively.

Figure 2 is a cross-sectional schematic view of a photochromic cell of the present invention, which is constructed with two clear glass sheets and one of them coated inwardly with a $TiO_2$ thin layer.

Figure 3 is a cross-sectional schematic view of a photochromic cell of the present invention, which is constructed with two clear glass sheets both of them coated inwardly with $TiO_2$ thin layers.

Figure 4 is a cross-sectional schematic view of a photochromic cell of the present invention, which is constructed with one clear glass sheet coated with a $TiO_2$ thin layer and one ITO coated glass sheet.

Figure 5 is a cross-sectional schematic view of an electrochromic cell of the present invention, which is constructed with two ITO coated glass sheets and one of them coated inwardly with a $TiO_2$ thin layer.

Figure 6 shows the transmission spectra of a photochromic cell shown in Fig.2 illuminated under sunlight at different times.

Figure 7 shows the transmission spectra of a photochromic cell which colored by the sunlight and self-erased indoor. This device can be also used as an electrochromic device.

Figure 8 shows the transmission spectra of a photochromic cell which was colored by the sunlight and self-erased indoor. This device can be used also as an electrochromic device.

Figure 9 shows the transmission spectra of a photochromic cell before and after illumination with the sunlight.

Figure 10 shows the transmission spectra of a photochromic cell before and after illumination with sunlight.

Figure 11 is the transmitted light intensity change of an electrochromic cell of colored and bleached states.

Figure 12 is the transmitted light intensity change of a photochromic cell of its coloring and bleaching processes.

Figure 13 is the transmitted light intensity change of a photochromic cell of its coloring and bleaching processes.

Figure 14 shows the transmission spectra of photochromic cells with different thicknesses of $TiO_2$ thin layers.

Figure 15 shows the transmission spectra of a photochromic cell colored by illumination at different light intensities.

Figure 16 shows the transmission spectra of photochromic cells filled with different aqueous solutions.

**Detailed description of the invention**

The first aspect of the present invention relates to a photochromic device, which comprises

(a) two clear glass sheets, which are transparent in the wavelength range from UV to visible light as shown in Fig. 1,
(b) or ITO coated glasses. Preferred ITO coated glass is also transparent in the wavelength range from UV to the visible region as shown in Fig. 1. The preferred ITO square resistance is as less as possible for the electrochromic devices, and is moderate for the photochromic devices,
(c) particularly a $TiO_2$ thin layer coated on clear glasses (a) or ITO coated glasses (b). The $TiO_2$ thin layer contacts directly with the inventious solution. Most preferred the $TiO_2$ thin layer is derived from Degussa P25 powder. $TiO_2$ thin films can be prepared by the spin-coating or doctor-blading or screen-printing technique. Transmissionspectra from the UV to the visible wavelength range as shown in Fig.1 reveal, that $TiO_2$ nanocrystalline particles absorb UV light (<400nm). Under illumination of the sunlight or a xenon lamp, electron-hole pairs can be generated in the $TiO_2$ layers.

Figure 2 illustrates a schematic configuration of the photochromic device according to the present invention which is a cell into which a photochromic solution 2 of the present invention is filled. The cell comprises a pair of clear glass sheets 20 and 21, sheet 20 is coated on an inwardly facing surface with a $TiO_2$ thin layer 22 with the thickness

of 1-3 μm. Sheets 20 and 21 are separated by a spacer 23 with the thickness of 13 μm (e.g. polyamide film). The cell is sealed at its perimeter by peripheral sealant 24. Sealant 24 comprises an epoxy material.

Figure 3 illustrates a photochromic device according to the present invention which is a cell into which a photochromic solution 3 of the present invention is filled. The cell comprises a pair of glass sheets 30 and 31, and both 30 and 31 are coated on inwardly facing surfaces with a $TiO_2$ thin layers 32 and 33 with the thickness of 1-3 μm. Sheets 30 and 31 are clamped tightly and sealed at its perimeter by peripheral sealant 34 without spacer. Sealant 34 comprises an epoxy material.

Figure 4 illustrates a photochromic device according to the present invention which is a cell into which a photochromic solution 4 of the present invention is filled. The cell comprises one glass sheet 40 and one sheet 41 with ITO layer 45, sheet 40 is coated on an inwardly facing surface with a $TiO_2$ thin layer 42 with the thickness of 1-3 μm. Sheets 40 and 41 are separated by a spacer 43 with the thickness of 13 μm (e.g. polyamide film). The cell is sealed at its perimeter by peripheral sealant 44. Sealant 44 comprises an epoxy material.

The second aspect of the present invention relates to a photo- and electrochromic multifunctional device, which comprises particularly a thin layer ($TiO_2$), which is coated on a ITO glass sheet and contacts directly with the inventious solution. The $TiO_2$ thin layers can be prepared by spin-coating, doctor-blading or screen printing techniques. As a photochromic device, the preferred thickness of the $TiO_2$ layer is 1-3 μm. The preferred process is spin-coating technique. As an electrochromic device, the preferred thickness of the $TiO_2$ layer is less than 1 μm. The preferred process is the sol-gel process.

Figure 5 illustrates a schematic configuration of the photo- and/or an electrochromic device according to the present invention which is a cell into which a photochromic solution 5 of the present invention is filled. The cell comprises a pair of glass sheets 50 and 51 coated with conducting layers 55 and 56, one of the ITO sheet 50 is coated on an inwardly facing surface 56 with a $TiO_2$ thin layer 52 with the thickness of 1-3 μm. Glass sheets 50 and 51 are separated by a spacer 53 with the thickness of 13 μm (e.g. polyamide film). The cell is sealed at its perimeter by peripheral sealant 54. Sealant 54 comprises an epoxy material.

When the cell is intended to be used as an electrochromic mirror, and thus the rear surface of glass plate 51 is coated with a silver reflector layer. If the device were used as an electrochromic window, this reflector layer would be omitted. The conductive ITO layers 55 and 56 are connected to electrical terminal 57 and 58, so that a voltage can be established across the solution located between sheets 55 and 56 in the cell 5. A preferred means is to use a conductive epoxy resin, such as standard commercially available silver epoxy.

In another aspect, the present invention entails a variable transmittance light-filter. The device varies continuously and rapidly in transmittance to light in the visible wavelength range as a function of the potential difference applied between the electrodes of the invention devices.

In a further aspect, the present invention entails a variable reflector mirror which has been suggested to be used as a rearview mirror in automobiles.

In a still further aspect, the present invention includes a smart windows which can adjust its light transmittance according to the intensity of illumination automatically. Additionally, the present invention includes also a display device, a UV protection glass, a UV radiation detector or indicator and a sunroof.

The third aspect of the present invention relates to a solution, for use as the variable color medium in the photochromic and electrochromic devices of the first and the second aspects, which comprises:

(a) a solvent (e.g. propylene carbonate, acetonitrile, butanol, or water). For the sake of stability of devices of the invention, it is required that the solvent solution of the invention does not undergo electrolysis or be involved in other, irreversible chemical reaction, during storage or normal operation of the device. It is preferred that the solvents be substantially free of dissolved oxygen and, but for water, be anhydrous. Most preferred is propylene carbonate.

(b) at least one of viologen derivatives as a cathodically coloring oxidant compound or electron acceptor. Among the cathodic electrochromic compounds, suitable for solutions of the invention are the known compounds of Formula I viologens

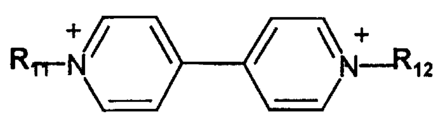 $2X^-$ (I)

wherein $R_{11}$ and $R_{12}$ are the same or different and are each selected from alkyl of 1 to 10 carbon atoms. Methylviologen, ethylviologen, benzylviologen and heptylviologen are all operable and satisfactory. $X^-$ is selected from

chloride, bromide, iodide, $BF_4^-PF_6^-$, $AsF_6^-$, $CLO_4^-$ and $NO_3^-$;

The preferred compounds of Formulas (I) are those wherein all of the anions $ClO_4^-$ or $BF_4^-$. Most preferred is $BF_4^-$. The preferred cations of compounds of Formula (I) are those wherein $R_1$ and $R_2$ are the same and are benzyl, phenyl or n-heptyl, most preferred is benzyl.

Further, the concentration of solution is at least $10^{-3}$ M up to its solubility, but more usually between about 0.01 M and 0.1 M, optimally from 0.02 to 0.04 M.

(c) at least one anodic electrochromic hole scavenger compound which accepts the hole simultaneously in $TiO_2$ particle valence band to prevent the short circuit inner particles (recombination of $e^-$ and $h^+$), for examples, LiI, KCNS and NaOAc etc. Most preferred are LiI and KCNS, e.g. at about 0.02 M and 0.04 M solutions, respectively.

(d) at least one of anodically electrochromic coloring oxidant compounds, which can react with colored reductant ($V^+$) to erase the cell itself (e.g. $I_2$ or phenazines);

Among the compounds suitable for solutions of the invention is the known compounds of Formula II

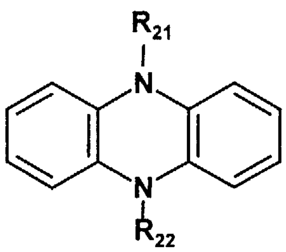

(II)

wherein, $R_2$, and $R_{22}$ are $C_{1-8}$ alkyl groups. 5,10-didydro-5,10-dimethylphenazine (DMPZ) is most preferred for electrochromic devices, e.g. at about 0.04 M solution. $I_2$ is most preferred for photochromic devices, e.g. 0.002 M solution.

(e) at least one of phtalic acid compounds, which accelerate coloring and bleaching processes. Most preferred is *m*-phtalic acid, e.g. about 0.04 M solution.

The fourth aspect of the present invention relates to a photochromic colloidal solution, which comprises:

(a) the above mentioned solution;
(b) $TiO_2$ nanoparticles
(c) a polymer or a surfantant (aqueous solution) is added to stabilize the suspension.

The preferred $TiO_2$ nanoparticle is in the range of 10 and 50 nm and with anatase crystal structure. The $TiO_2$ nanoparticle content in the solution is at 5 to 25% weight.

The solutions of the present invention are for use as the variable transmittance medium in single-compartment, self-erasing, solution-phase photochromic and electrochromic devices. Because the devices are "solution-phase", the concentrations of the substances in the solution for a device to be operated over a given temperature range, must be such that precipitation of substances from the solution does not occur, both at zero-potential equilibrium and during operation of a device. Generally, provided that, at zero-potential equilibrium at all temperatures in the range of intended use, all substances are present in the solution at concentrations below their solubilities, precipitation will not occur during operation of a device which includes the solution as the medium of reversibly variable transmittance. Lack of stability is indicated by a degradation of coloring/bleaching efficiencies.

The "self-erasing" feature of the devices of the present invention is provided by the spontaneous, apparently diffusion limited, reactions of oxidized anodic compounds with reduced cathodic compounds to yield anodic compounds and cathodic compounds in their respective zero-potential equilibrium states.

It is important, in practical applications of the devices of the present invention, that both coloring and decoloring (self-erasing), occur sufficiently fast. It is generally advantageous of the present invention of electrochromic devices that both coloring and bleaching processes occur as rapidly as possible. For photochromic devices, the coloring process is depended on the invention solution and illumination intensity and the bleaching process is limited by the solution invention and the devices of the designations.

For photochromic devices of the present invention, the coloring speed depends on the intensity of UV light and the solution of the invention. For electrochromic devices, the coloring and bleaching speed depends on the potential

between the electrodes and the solution.

The devices must be reversible and highly stable to cycling, at least several thousand times.

In order to oxidize and reduce the electrochromic compounds in solutions, and thereby cause a color change of the solution, the potential between the electrodes must be high enough to cause a current to flow across the solution between electrodes. A potential difference between about 0.3 volts and about 0.7 volts is usually adequate to cause current to flow and to start a color change of the present invention solution.

Devices of the present invention wherein water is the solvent of the solution will generally be operated at less than 1.4 volts to avoid electrolysis of water. And the current ranges from 0.1 to 10 $mA/cm^2$.

The invention is illustrated in more detail in the following examples. Unless specified otherwise, all concentrations cited in the examples are at room temperature (20-25°C). Examples are provided by the way of illustration and are not to be construed as being limiting on the invention.

**Examples**

**EXAMPLE I**

A photochromic cell was constructed by two clear glass sheets $2.5\times2.5$ $cm^2$ in area and separated by 13 μm thick strips of polyamide film. The glass sheet had been coated on two sides with $TiO_2$ thin layers with the thickness of 1 μm. And these sides were placed to face each other on the inside of the cell, as illustrated in Fig. 3. The edges of the cell were sealed with insulating epoxy. Prior to final sealing, the space between the sheets was filled with a solution which was formulated typically comprising:

0.04 M Dibenzylviologen dichloride
0.02 M Lithium iodide
0.007 M Iodine
0.04 M *m*-phthalic acid
in a 85:15 propylene carbonate and butanol mixture.

The cell was illuminated under sunlight at noon in winter ($19^{th}$ November, Bayreuth), the intensity of sunlight was measured by a Newport 835 power meter, 85 $mW/cm^2$. Fig.6 shows the transmission dependencies on the different illumination times under the sunlight. The transmission change at 605 nm wavelength relative to its original are 45.4% and 86.8% illuminated under the sunlight for 1 min and 5 mins, respectively. The colored cell was deep blue.

**EXAMPLE II**

A photochromic cell was constructed by two ITO sheets $2.5\times2.5$ $cm^2$ in area. One of the sheets had been coated on one side with $TiO_2$ thin layer with the thickness of 3 μm. The structure of the cell is the same as illustrated in Fig. 5, and the preparation of the cell was done like in Example I. The cell was filled with the same solution as in Example I.

The cell was illuminated with the sunlight for 5 mins at the same condition as in Example I.

The transmission change at 605 nm wavelength relative to its original is 45.4% as shown in Fig. 7. The cell bleached under the daylight indoor (roughly 130 $\mu W/cm^2$). One could be aware of the bleaching in 30min. Fig.7 also shows a transmission spectrum of the cell bleached after 2.5 hr. The photochromic cell was reversible. The colored cell was deep blue.

**EXAMPLE III**

A photochromic cell was constructed like in Example II. The cell was filled with a solution which was formulated typically comprising:

0.04 M Dibenzylviologen dichloride
0.02 M Lithium iodide
0.04 M 5,10-dihydro-5,10-dimethylphenazine
0.04 M *m*-phthalic acid
in a 85:15 propylene carbonate and butanol mixture.

The cell was illuminated with the sunlight for 5 mins at the same conditions as in Example I.

The transmission change at 605 nm wavelength relative to its original is 57.6% as shown in Fig. 8. The cell bleached under the daylight indoor (about 130 $\mu W/cm^2$). One could be aware of the bleaching in 30 min. Fig.8 shows also the transmission spectrum of the cell bleached after 2.5 hr. The photochromic cell was reversible. The colored cell was deep blue.

**EXAMPLE IV**

A photochromic cell was constructed by one clear glass sheet coated with a $TiO_2$ layer and one ITO glass sheet of the same structure as shown in Fig. 4, which was filled with the solution of in Example I.

The cell was illuminated with the sunlight for 10 mins at the same conditions as in Example I.

The transmission change at 605 nm wavelength relative to its original is 55.9% as shown in Fig. 9. The cell bleached under the daylight indoor (roughly 130 $\mu W/cm^2$). The cell totally bleached in 1 hr. The colored cell was deep blue.

**EXAMPLE V**

A photochromic cell was constructed by one clear glass sheet coated with a $TiO_2$ layer and one ITO glass sheet of the same structure as shown in Fig. 4, which was filled with the solution of Example III.

The cell was illuminated with the sunlight for 10 mins at the same conditions as in Example I.

The transmission change at 605 nm wavelength relative to its original is 52.8% as shown in Fig. 10. The cell bleached under the daylight indoor. The cell bleached totally in 1 hr. The colored cell was deep blue.

**EXAMPLE VI**

An electrochromic cell was constructed by two ITO glass sheets 2.5x2.5 $cm^2$ in area and separated by 13 $\mu m$ thick strips of polyamide film. The edges of of the cell were sealed with insulating epoxy. Prior to final sealing, the space between the sheets was filled with the same solution as in Example I.

A square pulse potential with 0 to 1.0 V was applied to the cell. Fig. 11 shows the coloring and bleaching cycles. The coloring and bleaching times are very fast, which are less than 1 second. Fig. 12 shows the coloring and bleaching processes of the photochromic cell of Example I, when it was illuminated by a xenon lamp with a light intensity of 120 $mW/cm^2$. The coloring time of the cell is about 2 mins, and the bleaching time is much longer. Fig. 13 shows the coloring and bleaching processes of a photochromic cell of Example II, when it was illuminated by a xenon lamp with a light intensity of 120 $mW/cm^2$. The light was chopped by a filter of GG435, which can cut off all the light of the wavelength short than 435 nm. The coloring and bleaching times are in about 2 mins. The coloration efficiency averaged over the whole visible spectral region is 11.8%.

**EXAMPLE VII**

Photochromic cells were constructed with the same structure as illustrated in Fig. 2. Various $TiO_2$ layer thicknesses were used for preparing the cells. All the cells were filled with the same solution of Example I.

Fig. 14 shows the thickness dependence of the transmission of the photochromic cells. The thicker the $TiO_2$ layer is, the higher porous the layer is. Therefore, the more viologen molecules are absorbed on $TiO_2$ particle surfaces of the thicker layer. But this deep color is at the cost of reducing the transparency of the photochromic cells. The preferred thickness of the present invention is 1 to 3 $\mu m$.

**EXAMPLE VIII**

Photochromic devices were fabricated in essentially the same way as the device illustrated in Example I and filled with the same solution of Example I. Fig. 15 shows the transmission changes of the cells which were illuminated under a xenon lamp with different intensities, 12.8 $mW/cm^2$, 26.4 $mW/cm^2$ and 84.7 $mW/cm^2$, respectively.

**EXAMPLE IX**

Photochromic cells were constructed with the same structure as illustrated in Fig.2. One of the cells was filled with an aqueous solution which was formulated comprising: 0.02 M dibenzylviologen dichloride and 0.01 M lithium iodide in deionized water. Another cell was filled with a aqueous solution which was formulated comprising: 0.04 M dibenzyl-viologen dichloride and 0.02 M lithium iodide in deionized water. The color of the photochromic cell filled with aqueous solution turned into purplish red or violet. The transmission changes of the photochromic cells are shown in Fig. 16. The aqueous solutions which comprising with KCNS, NaOAc or tetrapropylammonium iodide exhibited the coloration similarly to those illustrated in Fig. 16.

**EXAMPLE X**

A photochromic cell was constructed by two clear glass sheets 2.5x2.5 $cm^2$ in area and separated by 13 μm thick strips of polyamide film. The edges of the cell were sealed with insulating epoxy. Prior to final sealing, the space between the sheets was filled with a photochromic colloidal solution, which comprises:

(a) the above mentioned solutions of Example I or Example III;
(b) $TiO_2$ nanoparticles dispersed in the above solution;
(c) solution to stabilize the suspension.

The preferred $TiO_2$ nanoparticle is in the range of 10 and 50 nm and with anatase crystal structure. The $TiO_2$ nanoparticle content in the solution is at 5 to 25% weight. The photochromic cell was reversible. The colored cell was deep blue.

## Claims

1. A photochromic device comprising two parallel plates (20,21), at least one of which is a transparent sheet (20) coated with a $TiO_2$ thin layer (22) on its inward face and photochromic medium (2) between the coated glass sheet and the other plate.

2. A photochromic device according to claim 1 with both parallel plates being transparent sheets (30,31) coated with a $TiO_2$ thin layer (32,33) on their inward faces.

3. A photochromic device according to claim 1 with both plates being transparent sheets (40,41), one of which is coated with a $TiO_2$ thin layer (42) on its inward face, the other is coated with a layer of indium tin oxide (ITO) (45) on its inward face.

4. A photochromic device according to claim 3 with a layer of indium tin oxide (ITO) (56) on the the $TiO_2$-coated transparent sheet (50) between the transparent sheet (50) and the $TiO_2$ thin layer (52).

5. A photochromic device according to one of the claims 1 to 4 wherein the photochromic medium comprises a solvent comprising propylene carbonate and butanol in a ratio of 50:50 to 85:15.

6. A photochromic device according to one of the claims 1 to 4 wherein the photochromic medium comprises deionized water as solvent.

7. A photochromic device according to one of the claims 1 to 5 wherein the photochromic medium comprises a solution comprising:

   (a) at least one compound which is one of the viologen derivatives, for example: methylviologen; ethylviologen; benzylviologen; or heptylviologen, with a counterion which is perchlorate; bromide; iodide; or tetrafluoroborate.
   (b)
   (c) at least one compound which is one of the phenazine derivatives, for example:
   (d)

      DMPA-5,10-dihydro-5,10-dimethylphenazine;
      DEPA-5,10-dihydro-5,10-diethylphenazine;
      DOPA-5,10-dihydro-5,10-dioctylphenazine; or
      Iodine ($I_2$)

   (e) at least one compound which is

      Lithium iodide(LiI);
      Tetrapropylammonia iodide;
      Potassium thiocyanate (KCNS); or
      Sodium acetate anhydrous (NaOAc).

   (f) at least one phthalic acid, which is m-phthalic acid, and/or p-phthalic acid.

**8.** A photochromic device according to one of the claims 1 to 4 and 6, wherein the photochromic medium comprises a solution comprising:

(a) at least one compound which is one of the viologen derivatives, for example: methylviologen; ethylviologen; benzylviologen; or heptylviologen, with a counterion which is perchlorate; bromide; iodide; or tetrafluoroborate.

(b) at least one compound which is

Lithium iodide(LiI);
Tetrapropylammonium iodide;
Potassium thiocyanate (KCNS); or
Sodium acetate anhydrous (NaOAc).

(c) at least one phthalic acid, which is *m*-phthalic acid, orp-phthalic acid.

**9.** A photochromic device according to one of the claims 1 to 4, wherein the photochromic medium comprises a photochromic colloidal suspension which comprises:

(a) one solution according to claim 7,
(b) one solvent according to claim 5,
(c) $TiO_2$ nanoparticles dispersed in the above solution (a),
(d) a polymer stabilizer, e.g. polyvinyl alcohol (PVA).

**10.** A photochromic device according to one of the claims 1 to 5, wherein the photochromic medium comprises a photochromic colloidal suspension which comprises:

(a) one solution according to claims 8
(b) one solvent according to claim 6,
(c) $TiO_2$ nanoparticles dispersed in the above solution (a).
(d) a polymer stabilizer or a surfactant, e.g. polyacrylic acid (PAA).

**11.** A photochromic device according to one of the claims 1 to 10, which is used as a smart window, UV glasses, a sunroof, a mirror, UV light detector or an indicator, a display or a filter.

**12.** A electrochromic device comprising two parallel plates, at least one of which is a transparent sheet, both plates being coated with conductive layers such as layers of indium tin oxide (ITO) on their inward faces and electrochromic medium between the plates.

**13.** A electrochromic device according to claim 12 with both plates (50,51) being transparent sheets, one of which is coated with a $TiO_2$ thin layer (52) on its conductive layer (56).

**14.** A electrochromic device according to claim 12 or 13, wherein the electrochromic medium comprises a solvent comprising propylene carbonate and butanol in a ratio of 50:50 to 85:15 and a solution comprising:

(e) at least one compound which is one of the viologen derivatives, for example: methylviologen; ethylviologen; benzylviologen; or heptylviologen, with a counterion which is perchlorate; bromide; iodide; or tetrafluoroborate.

(f) at least one compound which is one of the phenazine derivatives, for example:

DMPA-5,10-dihydro-5,10-dimethylphenazine;
DEPA-5,10-dihydro-5,10-diethylphenazine;
DOPA-5,10-dihydro-5,10-dioctylphenazine; or
Iodine ($I_2$)

(g) at least one compound which is

Lithium iodide(LiI);
Tetrapropylammonia iodide;

Potassium thiocyanate (KCNS); or
Sodium acetate anhydrous (NaOAc).

(h) at least one phthalic acid, which is *m*-phthalic acid, and/or *p*-phthalic acid.

**15.** An electrochromic device according to one of the claims 12 to 10, which is used as a display or a filter.

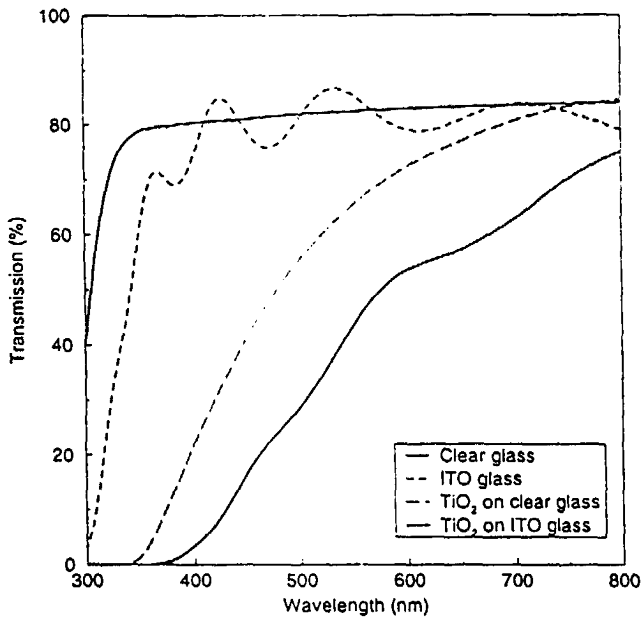
Transmission (%)
Wavelength (nm)
Clear glass
ITO glass
$TiO_2$ on clear glass
$TiO_2$ on ITO glass

Fig. 1

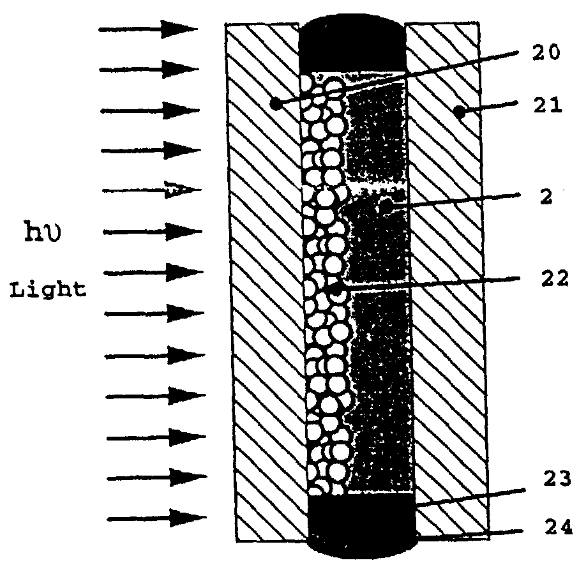
hυ
Light
20
21
2
22
23
24

Fig. 2

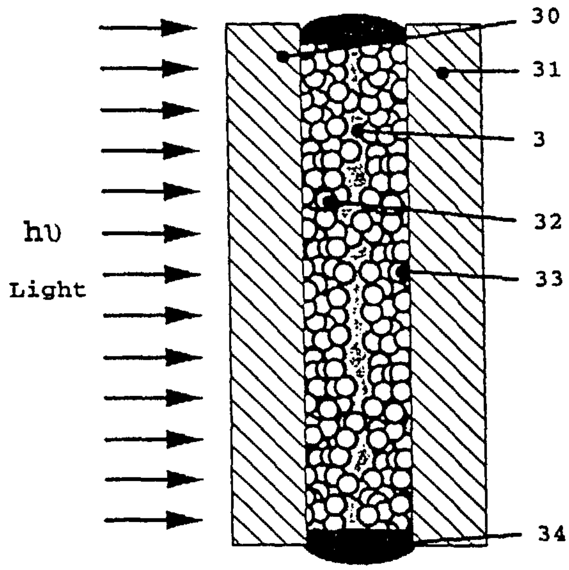


Fig. 3

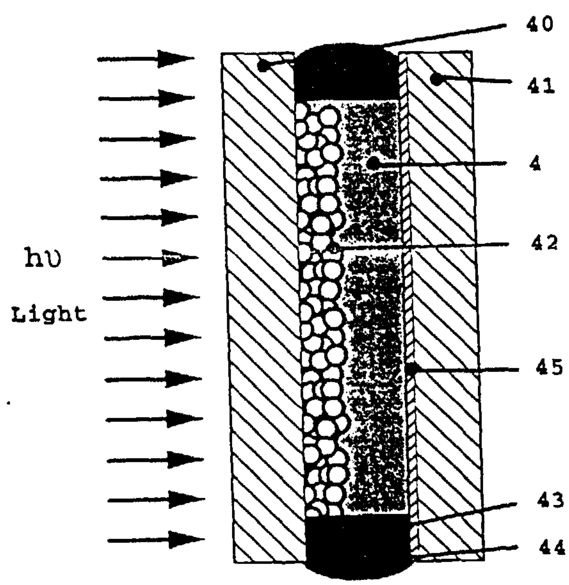


Fig. 4

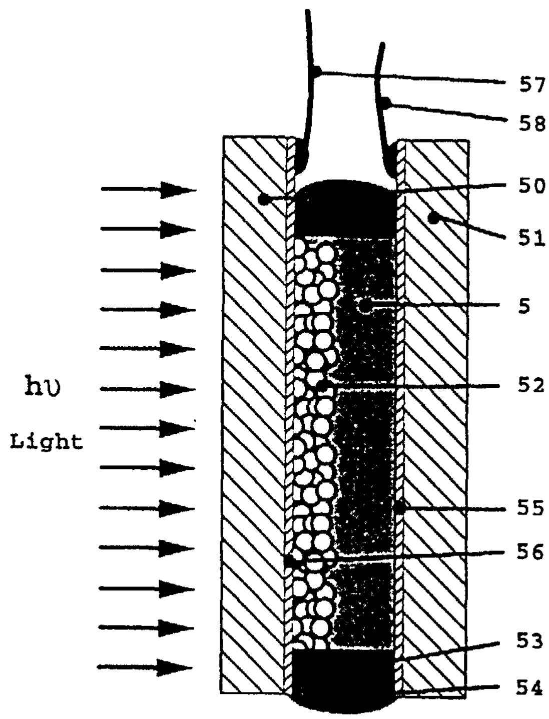
57
58
50
51
5
52
55
56
53
54
hυ
Light

**Fig. 5**

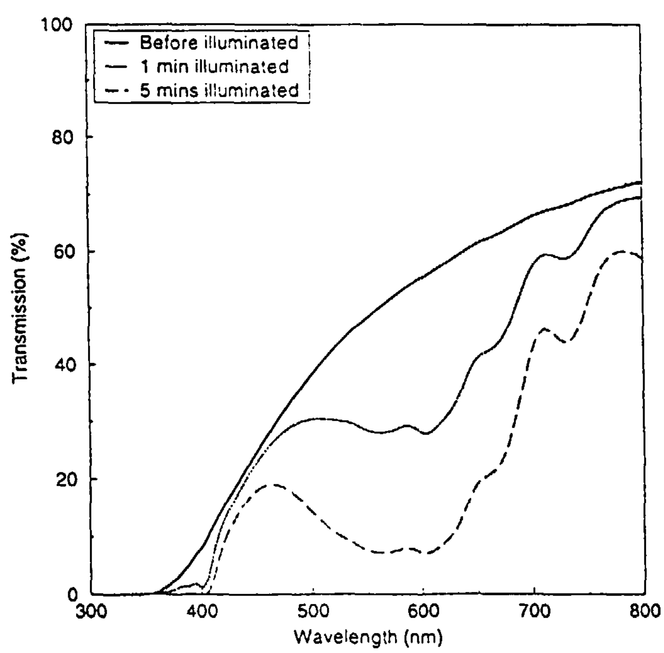
Before illuminated
1 min illuminated
5 mins illuminated
Transmission (%)
Wavelength (nm)
0
20
40
60
80
100
300
400
500
600
700
800

**Fig. 6**

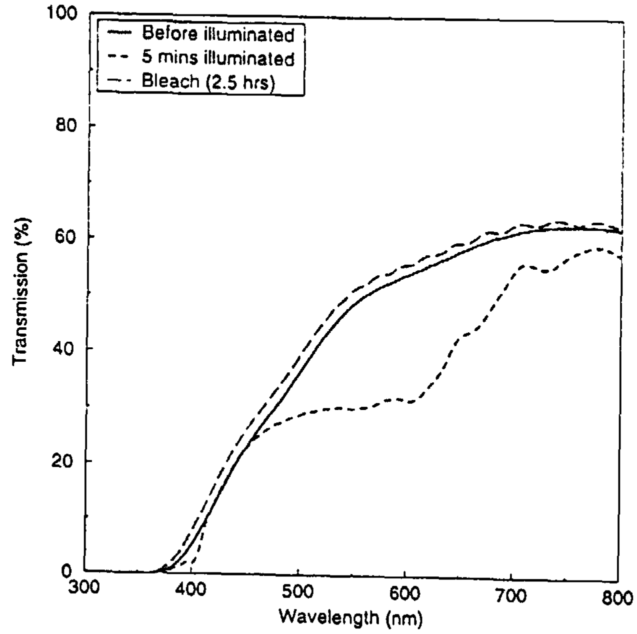
Before illuminated
5 mins illuminated
Bleach (2.5 hrs)
Transmission (%)
Wavelength (nm)
0
20
40
60
80
100
300
400
500
600
700
800

Fig. 7

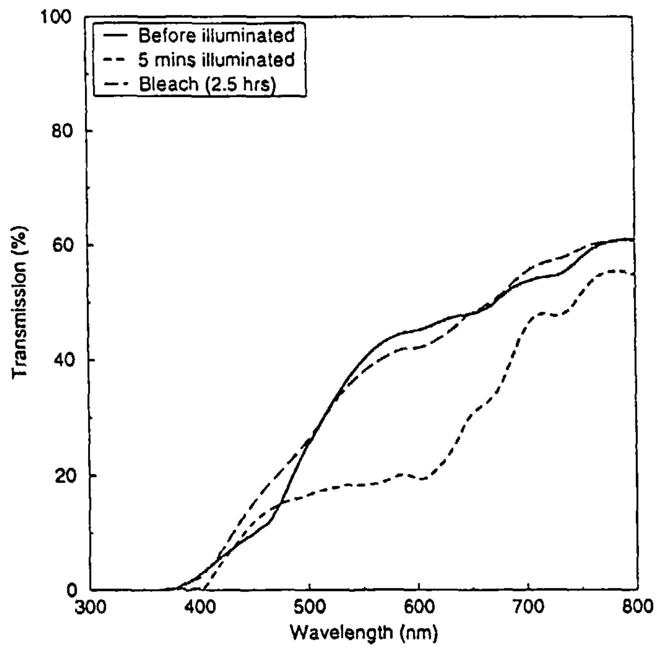
Before illuminated
5 mins illuminated
Bleach (2.5 hrs)
Transmission (%)
Wavelength (nm)
0
20
40
60
80
100
300
400
500
600
700
800

Fig. 8

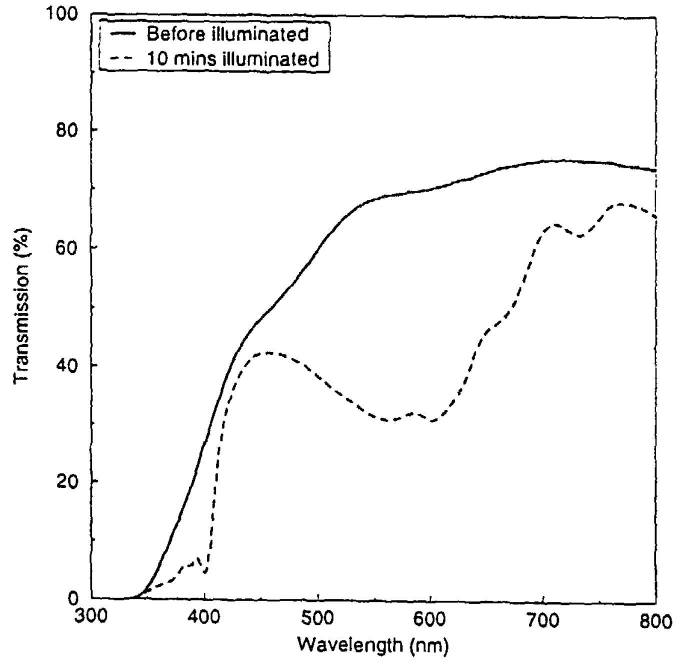
Before illuminated
10 mins illuminated
Transmission (%)
Wavelength (nm)
0
20
40
60
80
100
300
400
500
600
700
800

Fig. 9

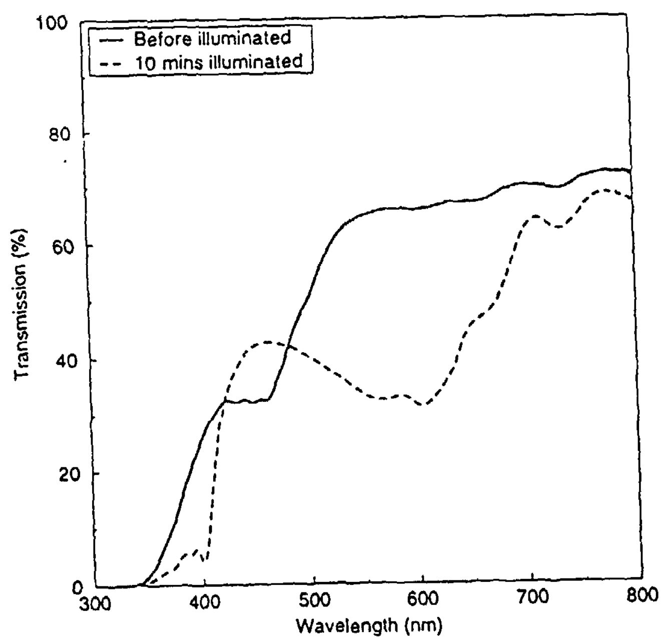
Before illuminated
10 mins illuminated
Transmission (%)
Wavelength (nm)
0
20
40
60
80
100
300
400
500
600
700
800

Fig. 10

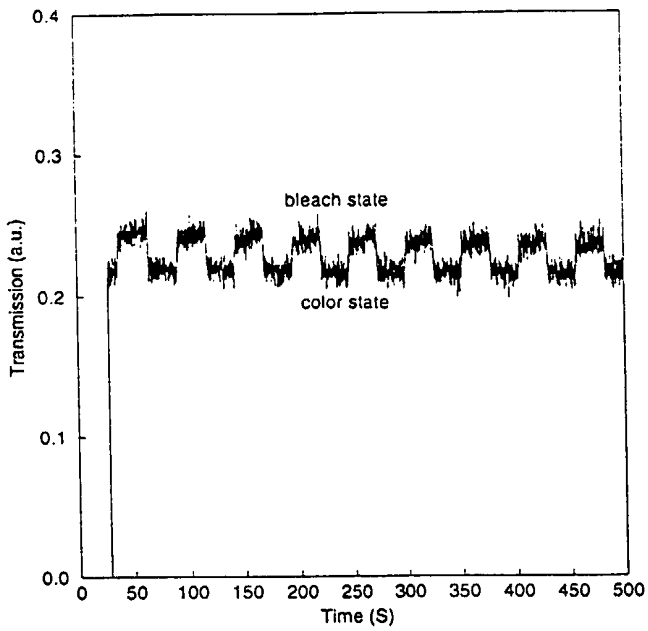
0.4
0.3
0.2
0.1
0.0
Transmission (a.u.)
bleach state
color state
0 50 100 150 200 250 300 350 400 450 500
Time (S)

Fig. 11

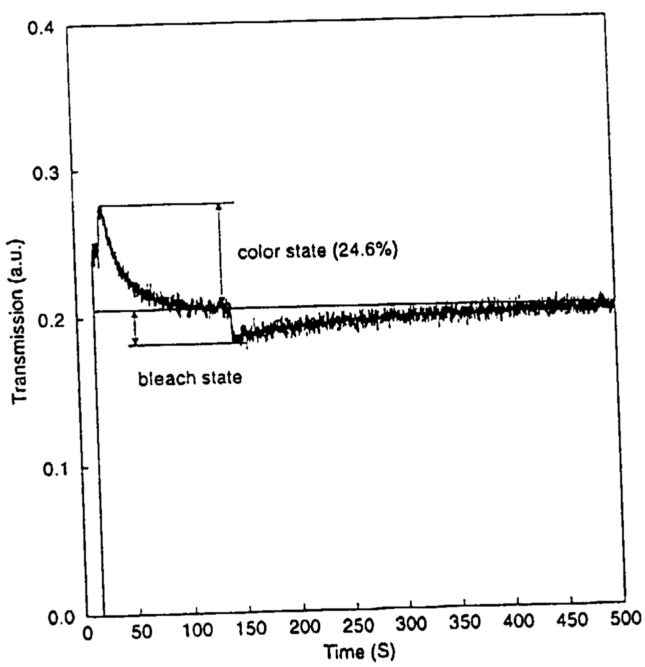
0.4
0.3
0.2
0.1
0.0
Transmission (a.u.)
color state (24.6%)
bleach state
0 50 100 150 200 250 300 350 400 450 500
Time (S)

Fig. 12

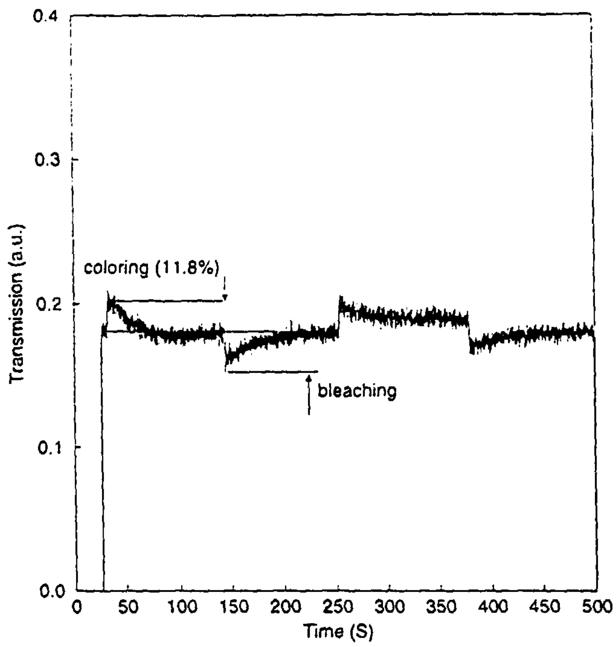
0.4
0.3
0.2
0.1
0.0
Transmission (a.u.)
coloring (11.8%)
bleaching
0
50
100
150
200
250
300
350
400
450
500
Time (S)

Fig. 13

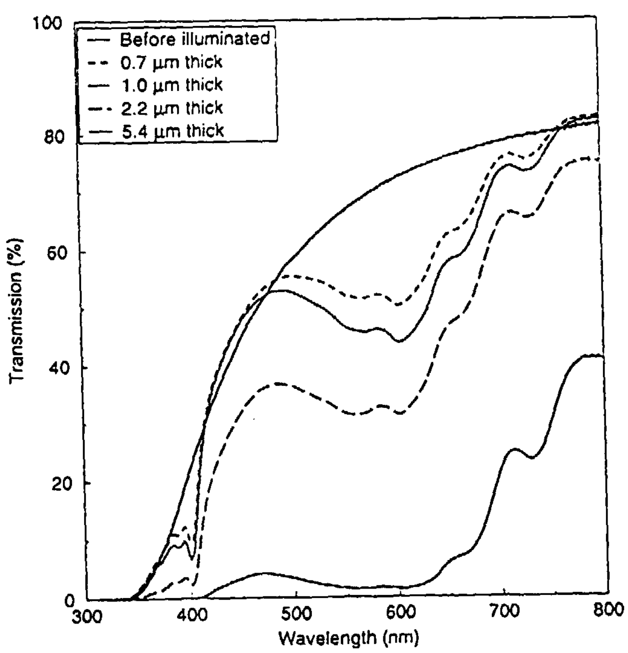
100
80
60
40
20
0
Transmission (%)
Before illuminated
0.7 μm thick
1.0 μm thick
2.2 μm thick
5.4 μm thick
300
400
500
600
700
800
Wavelength (nm)

Fig. 14

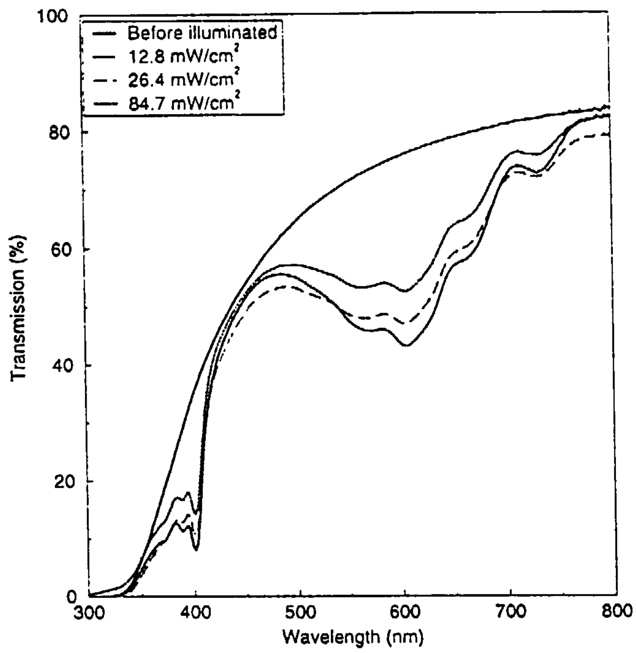
Before illuminated
12.8 mW/cm²
26.4 mW/cm²
84.7 mW/cm²
Transmission (%)
Wavelength (nm)
0
20
40
60
80
100
300
400
500
600
700
800

**Fig. 15**

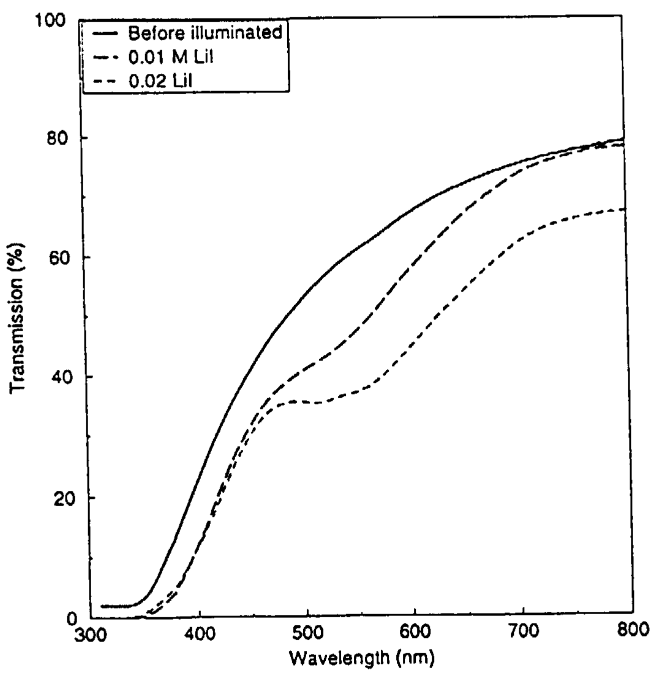
Before illuminated
0.01 M LiI
0.02 LiI
Transmission (%)
Wavelength (nm)
0
20
40
60
80
100
300
400
500
600
700
800

**Fig. 16**

European Patent Office

# EUROPEAN SEARCH REPORT

Application Number
EP 99 10 1380

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 96 24882 A (DONNELLY CORP) 15 August 1996<br>* page 17, line 04 - page 18, line 28 *<br>* page 24, line 35 - page 25, line 26 * | 1-5, 11-13,15 | G02F1/15<br>G02F1/163 |
| A | EP 0 240 226 A (GENTEX CORP) 7 October 1987<br>* page 8, line 53 - page 11, line 21 *<br>& US 4 902 108 A | 7,8 | |
| X | US 4 599 614 A (DEBERRY DAVID W ET AL) 8 July 1986<br>* column 3, line 37 - column 4, line 50; figure 1 * | 1-4 | |
| A | US 4 365 010 A (BARD ALLEN J ET AL) 21 December 1982<br>* column 2, line 29 - column 3, line 65 * | 1 | |

TECHNICAL FIELDS SEARCHED (Int.Cl.6)

G02F

The present search report has been drawn up for all claims

| Place of search | Date of completion of the search | Examiner |
|---|---|---|
| THE HAGUE | 28 May 1999 | Diot, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 10 1380

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-1999

| Patent document cited in search report | Publication date | Patent family member(s) | Publication date |
|---|---|---|---|
| WO 9624882 A | 15-08-1996 | US 5604626 A | 18-02-1997 |
| | | EP 0871924 A | 21-10-1998 |
| | | US 5838483 A | 17-11-1998 |
| EP 0240226 A | 07-10-1987 | US 4902108 A | 20-02-1990 |
| | | AU 652727 B | 08-09-1994 |
| | | AU 6804290 A | 28-02-1991 |
| | | AU 601411 B | 13-09-1990 |
| | | AU 7068787 A | 15-10-1987 |
| | | AU 682905 B | 23-10-1997 |
| | | AU 8034394 A | 23-02-1995 |
| | | DE 3751942 D | 12-12-1996 |
| | | DE 3751942 T | 03-04-1997 |
| | | EP 0725305 A | 07-08-1996 |
| | | JP 2726660 B | 11-03-1998 |
| | | JP 62294225 A | 21-12-1987 |
| | | JP 2672083 B | 05-11-1997 |
| | | JP 9120088 A | 06-05-1997 |
| | | JP 10138832 A | 26-05-1998 |
| | | US 5290930 A | 01-03-1994 |
| | | US 5282077 A | 25-01-1994 |
| | | US 5481395 A | 02-01-1996 |
| | | US 5801873 A | 01-09-1998 |
| | | US 5128799 A | 07-07-1992 |
| | | US 5751467 A | 12-05-1998 |
| US 4599614 A | 08-07-1986 | NONE | |
| US 4365010 A | 21-12-1982 | NONE | |

EPO FORM P0459

For more details about this annex : see Official Journal of the European Patent Office, No. 12/82